# FASCICULE DE BREVET EUROPEEN

(11) **EP 1 687 953 B1**
(45) Date de publication et mention de la délivrance du brevet: **23.01.2008**
(21) Numéro de dépôt: 04804580.1
(22) Date de dépôt: 26.11.2004
(51) Int. Cl.: H04L 29/06

(54) **MÉTHODE D'AUTHENTIFICATION D'APPLICATIONS**
VERFAHREN ZUR AUTHENTIFIKATION VON ANWENDUNGEN
METHOD FOR THE AUTHENTICATION OF APPLICATIONS

(30) Priorité: 27.11.2003 EP 03104412
(43) Date de publication de la demande: 09.08.2006
(73) Titulaire: Nagracard S.A., 1033 Cheseaux-sur-Lausanne (CH); Swisscom Mobile AG, 3050 Bern (CH)
(72) Inventeur: KSONTINI, Rached, CH-1004 Lausanne (CH); CANTINI, Renato, CH-1782 Belfaux (CH)
(74) Mandataire: Wenger, Joel-Théophile
(86) Numéro de dépôt international: PCT/EP2004/053116
(87) Numéro de publication internationale: WO 2005/053263

(56) Documents cités:
- FR-A- 2 831 362
- GB-A- 2 387 505

## Description

La présente invention concerne le domaine des réseaux mobiles appelés aussi réseaux cellulaires. Elle concerne plus particulièrement la gestion de la sécurité d'applications mise en oeuvre avec un module de sécurité associé à un équipement mobile de téléphonie mobile.

Le module de sécurité d'un téléphone mobile ou portable est connu sous l'appellation "carte SIM" (Subscriber Identity Module) constituant l'élément central de la sécurité de ces téléphones. L'opérateur de téléphonie introduit, à la fabrication et/ou lors d'une phase de personnalisation, un numéro appelé IMSI (International Mobile Subscriber Identification) servant à identifier d'une manière sûre et unique chaque abonné désirant se connecter sur un réseau mobile. Chaque téléphone mobile, appelé équipement mobile ci-après, est identifié physiquement par un numéro stocké dans une mémoire non volatile de l'équipement mobile. Ce numéro, appelé IMEI, (International Mobile Equipment Identifier) contient une identification du type d'équipement mobile et un numéro de série servant à identifier de manière unique un équipement mobile donné sur un réseau du type GSM (Global System for Mobile communications), GPRS (General Packet Radio System) ou UMTS (Universal Mobile Telecommunications System). De plus, un équipement mobile est caractérisé par une version de logiciel SVN (Software Version Number) indiquant l'état de mise à jour du logiciel de base installé sur l'équipement mobile. La combinaison de l'identification du type et du numéro de série de l'équipement mobile avec la version de logiciel (SVN) donne une nouvelle identification, appelée IMEISV (International Mobile Equipment Identifier and Software Version Number). Le même concept d'identification s'applique également au WLAN (Wireless LAN) ou au câble TV bidirectionnel. L'identifiant physique peut être une adresse MAC (Media Access Control) qui correspond à l'adresse unique identifiant la configuration du matériel d'un utilisateur sur un réseau IP (Internet Protocol) et la version de logiciel peut être transmise par des protocoles de couche supérieure basés sur IP.

Les normes ETSI ("European Telecommunications Standards Institute"), définissent une station mobile (MS, mobile station) composée d'un équipement mobile (ME, mobile equipment) et d'un module d'abonné (SIM, subscriber identity module). Ce module d'abonné est en général amovible c'est-à-dire qu'il peut être soit retiré soit transféré d'un équipement mobile à un autre.

Lors de la mise en service d'un équipement mobile, plus particulièrement lors de sa connexion au réseau d'un opérateur, des informations comprenant les données d'identification sont échangées entre l'équipement mobile et le centre de gestion de l'opérateur qui autorise ou non son utilisation. Actuellement un équipement mobile offre à l'utilisateur, en plus de sa fonction usuelle d'établissement de conversations téléphoniques par le biais d'un accès à un réseau mobile, l'utilisation de nombreux autres services supplémentaires à valeur ajoutée tels que la consultation de diverses informations, les opérations bancaires à distance, le commerce électronique, l'accès à du contenu multimédia, etc. Ces services évolués nécessitent un niveau de sécurité de plus en plus élevé afin de prémunir les utilisateurs contre les fraudes éventuelles causées par des tiers cherchant à exploiter des failles de sécurité qui peuvent apparaître sur les équipements mobiles.

Une vérification devient donc nécessaire au moins à deux niveaux: d'une part au niveau de l'équipement mobile lui-même et d'autre part à celui des applications logicielles permettant le fonctionnement des différents services proposés par l'opérateur ou des parties tierces. Ces applications sont en général téléchargées depuis le serveur d'un fournisseur d'applications, ce qui implique la nécessité de vérifier ce téléchargement. Il s'agit donc de garantir que le module d'abonné ne fournit des informations qu'à des applications autorisées une fois que ce module a été reconnu par le serveur de contrôle comme pouvant fonctionner avec l'équipement mobile dans lequel il est inséré.

Le module d'abonné peut contenir des informations confidentielles tels qu'un numéro de compte bancaire ou un mot de passe. Une application fonctionnant sur l'équipement mobile sera en charge d'utiliser ces données personnelles afin de fournir le service attendu. Néanmoins, une application pourrait détourner ces données personnelles à d'autres fins que le dialogue avec le fournisseur d'application concerné. Il peut en résulter un préjudice important pour le propriétaire du module d'abonné.

Ces applications exécutées dans l'équipement mobile utilisent des ressources disponibles dans le module d'abonné. Par ressources, on entend diverses fonctions et données nécessaires au bon fonctionnement d'une application. Certaines de ces ressources peuvent être communes à plusieurs applications, notamment les fonctions liées à la sécurité. Le module d'abonné peut ainsi bloquer ou altérer le fonctionnement de certaines applications pour lesquelles les conditions de sécurité établies par l'opérateur et/ou les fournisseurs d'applications ne sont pas respectées dans l'équipement mobile en question ou les droits de l'utilisateur de l'équipement mobile sont insuffisants.

Le document FR2831362 décrit un procédé de transaction sécurisée entre un téléphone mobile muni d'une carte SIM et un serveur d'applications. Le but de ce procédé est de protéger des droits liés à l'utilisation d'applications téléchargées depuis le serveur au moyen de la carte SIM.

Selon ce procédé, un lien de confiance est d'abord établi entre le serveur et la carte SIM par l'échange sécurisé de clés publiques, puis un achat d'une application est effectué par la transmission d'un fichier de demande par l'équipement mobile au serveur. Celui-ci encrypte partiellement ou entièrement l'application et transmet à l'équipement mobile un cryptogramme formé par la clé d'encryption et une commande, le tout crypté avec une clé publique connue de la carte SIM. A la réception par l'équipement mobile, ce cryptogramme est décrypté et la clé stockée dans la carte SIM. L'exécution de la commande entraîne le téléchargement dans l'équipement mobile de l'application partiellement ou entièrement encryptée par le serveur. Une fois chargée, l'application est décryptée par la clé stockée dans la carte SIM puis installée dans l'équipement mobile.

Selon ce procédé, les droits d'utiliser l'application dans l'équipement mobile sont protégés du fait du lien de confiance établi initialement entre l'équipement et le serveur et précédant la transaction. Le rôle joué par le serveur se concentre ici plutôt dans la gestion des droits ou DRM (Digital Rights Management) des utilisateurs d'une application dans un équipement mobile. La solution développée ci-après est orientée plutôt vers la gestion des risques (Risk Management) pris en compte par l'opérateur, le fournisseur d'application ou l'utilisateur par rapport à une application.

Le but de la présente invention est de proposer une méthode d'authentification de ou des applications dans un équipement mobile tant lors de leur téléchargement que lors de leur exécution. Il s'agit de limiter les risques liés au fait qu'un module d'abonné soit utilisé à mauvais escient soit par des applications ne remplissant pas certains critères de sécurité, soit par des équipements mobiles ne remplissant pas certains critères de sécurité préétablis.

Un autre but est de protéger l'utilisateur de l'équipement mobile ainsi que les fournisseurs d'applications concernés contre les abus résultants de l'usage d'applications non autorisées.

Ces buts sont atteints par une méthode d'authentification d'au moins une application fonctionnant dans un équipement connecté par un réseau à un serveur de contrôle, ledit équipement étant localement connecté à un module de sécurité, ladite application est chargée et/ou exécutée au moyen d'un environnement d'exécution d'applications de l'équipement et utilise des ressources stockées dans le module de sécurité, comprenant les étapes préliminaires suivantes:
- réception de données comprenant au moins l'identifiant de l'équipement et l'identifiant du module de sécurité, via le réseau, par le serveur de contrôle,
- analyse et vérification par le serveur de contrôle desdites données,
- génération d'un cryptogramme comprenant une empreinte de l'application, des données identifiant l'équipement et le module de sécurité et des instructions destinées audit module,
- transmission dudit cryptogramme, via le réseau et l'équipement, au module de sécurité,
- vérification de l'application en comparant l'empreinte extraite du cryptogramme reçu avec une empreinte déterminée par le module de sécurité,
ladite méthode est caractérisée en ce que, lors de l'initialisation et/ou de l'activation de l'application, le module de sécurité exécute les instructions extraites du cryptogramme et libère, respectivement bloque l'accès à certaines ressources dudit module de sécurité en fonction du résultat de la vérification propre à cette application effectuée préalablement.

Les ressources du module de sécurité sont bloquées ou libérées de manière ciblée, ceci dans le but de rendre certaines applications utilisables ou non. On ne bloque pas ou libère pas directement des applications de l'équipement mobile: on agit de manière indirecte sur les applications, c'est-à-dire que l'effet de blocage ou de libération va se manifester uniquement lorsque l'équipement mobile essaiera d'exécuter ces applications.

Cette méthode s'applique de préférence au réseau mobile. Par conséquent, l'équipement est, par exemple, un équipement de téléphonie mobile et le module de sécurité un module d'abonné ou carte SIM. Cet ensemble se connecte à un réseau mobile du type GSM (Global System for Mobile communications), GPRS (General Packet Radio Service), UMTS (Universal Mobile Telecommunications System) ou autre, géré par un serveur de contrôle d'un opérateur. Des applications logicielles sont installées dans l'équipement mobile et configurées de manière à utiliser des ressources (données ou fonctions) présentes dans le module d'abonné. Elles ne peuvent donc être utilisées dans leur intégralité seulement si les conditions de sécurités sont satisfaites selon des critères préétablis par l'opérateur et/ou le fournisseur d'applications. Cette vérification des critères est à la charge du serveur de contrôle. L'application, suite aux instructions envoyées par le serveur de contrôle, est finalement à la charge du module de sécurité qui peut laisser libre ou bloquer l'accès à des ressources nécessaires au bon fonctionnement d'une application installée dans l'équipement mobile.

Les données de ces ressources peuvent comprendre des informations tels que numéro de comptes, des programmes (sous forme de code pouvant être installé dans l'équipement mobile), des clés d'encryption/décryption, des droits d'accès à du contenu, etc.

Les fonctions de ces ressources peuvent comprendre des algorithmes cryptographiques, des processus de vérification, des processus de génération de signatures digitales, des processus d'encryptage, des processus d'authentification, des processus de validation de données, des processus de contrôle d'accès, des processus de sauvegarde de données, des processus de paiement etc.

La méthode selon l'invention est basée sur le fait qu'à une application on associe un cryptogramme qui conditionne l'utilisation de l'application sur un équipement mobile connecté à un réseau.

A la différence du procédé décrit dans le document FR2831362, l'encryption partielle ou entière de l'application, avant téléchargement dans l'équipement mobile, n'est pas nécessaire. En effet, selon la méthode de l'invention, la liaison entre le serveur et le module de sécurité (ou module d'abonné) sert à contrôler de manière optimale ses ressources et à décider leur mise en service ou non par rapport aux applications exécutées dans l'équipement mobile. La commande reçue du serveur, dans le procédé du document cité, permet de contrôler l'utilisation de l'application installée dans l'équipement mobile, tandis que dans la présente méthode, elle permet d'activer ou désactiver des ressources du module de sécurité.

Par exemple, lorsque des ressources sont désactivées, l'application fonctionnera d'une façon "minimale" laissant un nombre réduit de possibilités à l'utilisateur. Dans un exemple de réalisation, cette réduction peut porter sur le montant maximum autorisé pour l'achat de services et de plus, ces services ne pourraient être obtenus que dans un lieu donné (centre commercial, stade, gare, aéroport, etc.)

Dans un premier mode de réalisation, le cryptogramme est transmis au module d'abonné pendant le chargement de l'application. Dans un second mode de réalisation, c'est l'application qui va chercher le cryptogramme sur le serveur de contrôle lors de sa première utilisation.

La méthode d'authentification selon l'invention s'applique également lors de l'exécution d'une application par l'équipement mobile, ce qui permet de s'assurer, à l'aide du module d'abonné, que cette application est autorisée à accéder certaines ressources (données ou fonctions) contenues dans ledit module d'abonné. En particulier, le module d'abonné peut vérifier régulièrement le cryptogramme attaché à une application au cours de l'exécution de ladite application.

Par exemple, l'insertion d'un module d'abonné d'un utilisateur dans un autre équipement mobile influencera le fonctionnement de certaines applications sans empêcher l'établissement de communications téléphoniques classiques. Cette barrière agit en quelque sorte comme un filtre visant à éliminer des équipements mobiles non autorisés ou encore des applications provenant de sources non agréées par l'opérateur ou un fournisseur d'application partenaire.

Une modification de l'application par un tiers est également détectée par le module d'abonné qui refusera d'exécuter certaines commandes reçues entraînant ainsi le blocage ou des limitations de l'exécution de l'application.

Le serveur de contrôle joue donc un rôle essentiel en gérant les éléments de confiance ou de sécurité liés à l'ensemble équipement mobile/module d'abonné. Il interprète les données qui lui sont transmises par l'équipement mobile afin de contrôler ou limiter l'utilisation d'applications grâce aux ressources (données ou fonctions) stockées dans le module d'abonné.

Le serveur recevant les informations d'identité d'un équipement mobile et de son module d'abonné et comprenant les identifiants IMEISV et l'IMSI décide, selon certains critères, si une nouvelle instruction doit être envoyée au module d'abonné pour redéfinir un nouveau profil de protection définissant les ressources du module d'abonné pouvant être utilisées par les applications exécutées dans l'équipement mobile. Les critères peuvent se référer, par exemple, à la mise à jour de la version de logiciel installée sur l'équipement mobile, au téléchargement de nouvelles applications sur l'équipement mobile, à la période de mise à jour du profil de protection, au nombre de connexions au réseau, à la technologie utilisée pour l'accès au réseau, à l'identité du réseau d'accès utilisé. Ils sont également liés à différents risques associés au matériel ou aux logiciels utilisés que l'opérateur et/ou le fournisseur d'applications et/ou l'utilisateur de l'équipement mobile désirent prendre en compte.

La vérification du cryptogramme peut s'effectuer lors du premier démarrage ou lors de la première utilisation d'une application ou à chaque démarrage de celle-ci.

Selon une variante, elle peut être exécutée périodiquement à un rythme donné selon des instructions provenant du serveur de contrôle.

Lors d'un chargement d'une application dans un équipement mobile, le cryptogramme attaché accompagnant l'application inclut en général une empreinte de l'application elle-même, c'est à dire un bloc de données calculé à partir du code de l'application à l'aide d'une fonction mathématique unidirectionnelle de hachage.

Lorsque le module d'abonné vérifie la validité du cryptogramme, il identifie aussi, de manière indirecte, l'équipement mobile et s'assure que les données viennent effectivement du serveur de contrôle. Autrement dit, par ce cryptogramme, le serveur de contrôle donne implicitement l'assurance au module d'abonné que le type et la version de logiciel de l'équipement mobile ont été pris en compte, que le chargement de l'application a été contrôlé et que l'application est authentique. Selon des instructions préalablement reçues, le module d'abonné décidera d'autoriser ou de refuser des requêtes ou des commandes venant de l'application.

L'équipement mobile joue un rôle de relais dans cette étape de vérification en établissant un dialogue quasi direct entre le module d'abonné et le serveur de contrôle. Ainsi la sécurité des messages échangés est assurée de bout en bout entre le serveur de contrôle et le module d'abonné via l'environnement d'exécution des applications de l'équipement mobile. Celui-ci ne peut donc pas "tricher" ou transformer les données vis-à-vis du module d'abonné.

La présente invention concerne également un module de sécurité comprenant des ressources destinées à être localement accédées par au moins une application installée dans un équipement relié à un réseau, ledit équipement comprenant des moyens de lecture et de transmission de données comprenant au moins l'identifiant de l'équipement et l'identifiant du module de sécurité, ledit module est caractérisé en ce qu'il comprend des moyens de réception, de stockage et d'analyse d'un cryptogramme contenant entre autre données une empreinte de ladite application et des instructions, des moyens de vérification de ladite application et des moyens d'extraction et d'exécution des instructions contenues dans le cryptogramme libérant ou bloquant certaines ressources selon le résultat de la vérification de l'application.

Ce module de sécurité est utilisé par exemple comme module d'abonné ou carte SIM connecté à un équipement mobile.

L'invention sera mieux comprise grâce à la description détaillée qui va suivre et qui se réfère aux figures annexées données à titre d'exemple nullement limitatif, à savoir:
- La figure 1a illustre un schéma bloc montrant le processus d'installation d'une application selon un premier mode de réalisation où le cryptogramme est délivré via l'environnement d'exécution d'applications.
- La figure 1 b illustre le processus de vérification du cryptogramme selon le mode de la figure 1a.
- La figure 1c illustre le processus de l'exécution de l'application utilisant les ressources du module d'abonné selon le mode de la figure 1 a.
- La figure 2a illustre un schéma bloc montrant le processus d'installation d'une application selon un second mode où l'application seule est téléchargée.
- La figure 2b illustre le processus de vérification où l'application sollicite un cryptogramme auprès du serveur de contrôle selon le mode de la figure 2a.
- La figure 2c illustre le processus de l'exécution de l'application utilisant les ressources du module d'abonné selon le mode de la figure 2a.
- La figure 3a illustre un schéma bloc montrant le processus d'installation d'une application selon un troisième mode où l'application seule est téléchargée.
   La figure 3b illustre le processus de vérification où l'application sollicite un cryptogramme et une empreinte de l'application auprès du serveur de contrôle selon le mode de la figure 3a.
   La figure 3c illustre le processus de l'exécution de l'application utilisant les ressources du module d'abonné selon le mode de la figure 3a.
- La figure 4 illustre la structure d'un exemple de cryptogramme.

Les schémas blocs des figures 1a, 1b, 1c, 2a, 2b, 2c, 3a, 3b, 3c montrent un ensemble équipement mobile (CB) module d'abonné (SIM) contenant des ressources (RES) relié via un réseau mobile (NET) à un serveur de contrôle (CSE) administré par un opérateur. Ce serveur (CSE) est connecté à un ou plusieurs fournisseurs d'applications (FA).

L'équipement mobile (CB) inclut une ou plusieurs applications (APP) logicielles fonctionnant dans un environnement d'exécution (AEE). Ces applications (APP) proviennent, soit du fournisseur d'applications (FA) associé au serveur de contrôle (CSE) de l'opérateur, soit, elles peuvent être programmées d'origine par le fabricant de l'équipement mobile (CB). Dans ce dernier cas, il est parfois nécessaire de télécharger des mises à jour qui sont également vérifiées par le module d'abonné (SIM).

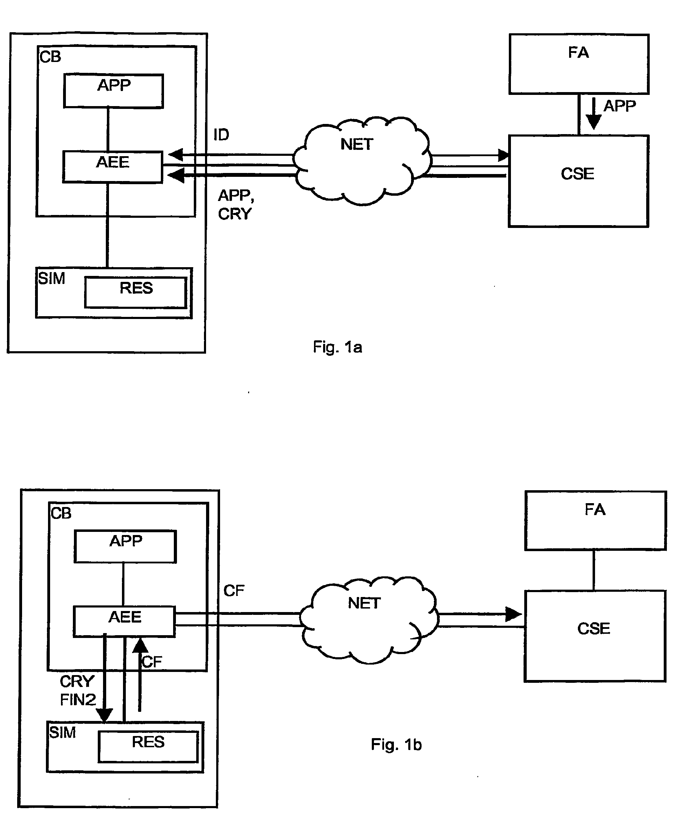

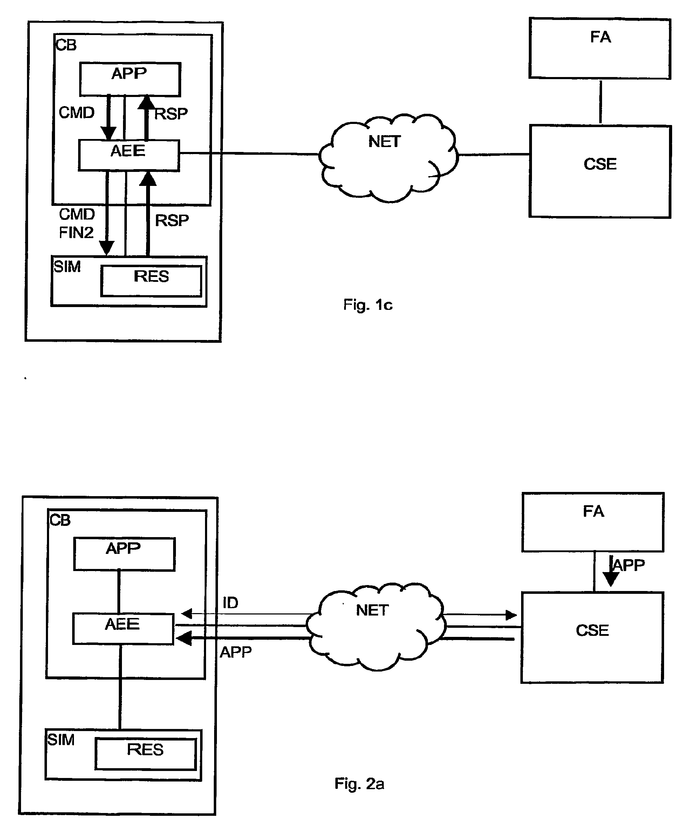

Selon le premier mode de réalisation illustré par les figures 1a, 1b, 1c, le cryptogramme (CRY) d'une application (APP) est délivré au module d'abonné (SIM) via l'environnement d'exécution d'applications (AEE) lors du processus d'installation de l'application (APP).

La figure 1a illustre le processus d'installation où l'équipement mobile (CB) transmet d'abord des données servant à l'identification (ID) du module d'abonné (SIM) que le serveur de contrôle (CSE) vérifie. Cette identification (ID) est effectuée à partir de l'identifiant (IMSI) du module d'abonné (SIM) et de l'identifiant (IMEISV) unique de l'équipement mobile (CB). Une application (APP) est ensuite téléchargée depuis le serveur (CSE) accompagnée d'un cryptogramme (CRY) qui sera transmis vers le module d'abonné (SIM) via l'environnement d'exécution (AEE) pour vérification comme illustré dans la figure 1 b.

Il est à noter que le fournisseur (FA) est considéré comme digne de confiance par l'opérateur, c'est-à-dire que les applications (APP) sont homologuées et fonctionnent sans causer un quelconque préjudice à l'utilisateur et/ou à l'opérateur.

La méthode selon l'invention s'applique à plusieurs formes d'applications (APP) exécutées dans différents types d'environnement d'exécution (AEE). Par exemple, de nombreux téléphones mobiles possèdent des fonctionnalités issues d'applications Java qui sont exécutées par une machine virtuelle (VM) Java servant de processeur et d'environnement. La description ci-après se base sur l'exemple d'applications Java. Bien entendu, d'autres environnements ou systèmes d'exploitations tels que Symbian OS, Windows, Palm OS, Linux etc. peuvent être utilisés comme support d'applications.

Lors de son exécution, voir figure 1c, une application Java sollicite le module d'abonné (SIM), elle en informe l'environnement d'exécution (AEE) en lui adressant des requêtes ou commandes (CMD). L'environnement d'exécution (AEE) calcule l'empreinte (FIN2) de l'application (APP) et l'envoie au module d'abonné (SIM). Le cryptogramme (CRY) qui a été généré par le serveur de contrôle (CSE) puis chargé dans l'équipement mobile (CB) avec l'application (APP) (ou séparément), est stocké dans le module d'abonné (SIM). Ce dernier vérifie d'abord qu'il possède effectivement les données nécessaires lui permettant de décider s'il doit répondre à des requêtes ou commandes (CMD) de l'application (APP). Ces données, faisant office de droits chargés à partir du serveur de contrôle (CSE) lors du chargement de l'application (APP), permettent de contrôler le fonctionnement de l'application (APP). En cas d'absence de ces droits, l'application (APP) ne pourra utiliser les ressources (RES) (données ou fonctions) du module d'abonné (SIM).

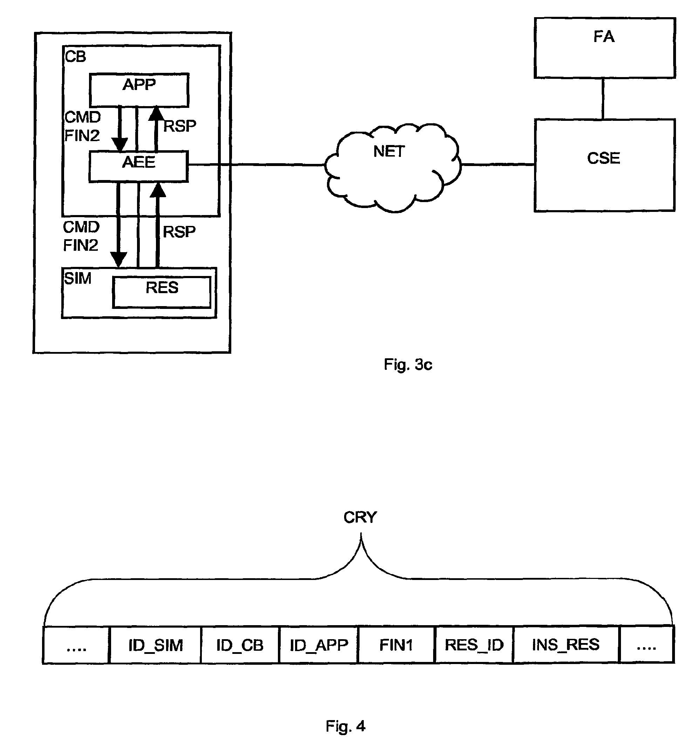

Dans le cas où ces droits sont présents, le module d'abonné (SIM) vérifie l'empreinte (FIN1) issue du cryptogramme (CRY) stocké en la comparant avec l'empreinte (FIN2) associée à l'application (APP) et fournie par l'environnement d'application (AEE). Ce cryptogramme (CRY) peut se constituer sous la forme d'un bloc encrypté par une clé privée du type RSA (Rivest, Shamir, Adelman). Ce bloc représenté par la figure 4 contient par exemple, entre autres données, l'identifiant IMSI (ID_SIM) du module (SIM) d'abonné, l'identifiant IMEISV (ID_CB) de l'équipement mobile (CB), un identificateur (ID_APP) de l'application, l'empreinte (FIN1) de l'application (APP), des identificateurs SIM (RES_ID) des ressources (RES) et des instructions (INS_RES) de blocage/libération des ressources SIM. Cette clé privée ne serait connue que du serveur de contrôle (CSE), alors que sa partie publique serait connue du module d'abonné (SIM). L'avantage de l'utilisation de clés asymétriques réside en ce que la clé servant à créer des cryptogrammes ne se trouve pas à l'extérieur du serveur de contrôle (CSE).

Bien entendu, d'autres algorithmes à clés asymétriques tels que par exemple DSA (Digital Signature Algorithm), et ECC (Elliptic Curve Cryptography) peuvent constituer des alternatives à RSA

L'usage d'algorithme à clés symétriques peut être préféré pour des raisons de simplicité, de rapidité des vérifications ou de coûts de fabrication et de mise en oeuvre plus faibles. Dans ce cas, la clé serait connue du serveur (CSE) et du module d'abonné (SIM), par exemple un algorithme IDEA (International Data Encryption Algorithm) pourrait être utilisé pour signer le bloc (IMSI, IMEISV, identificateur de l'application, empreinte de l'application, identificateurs des ressources SIM, instructions de blocage/libération des ressources SIM). Comme alternative à l'algorithme IDEA, des algorithmes tels que, par exemple, TDES (Triple Data Encryption Standard) et AES (Advanced Encryption Standard) peuvent aussi être utilisés.

Dans ces deux variantes à clés asymétriques et symétriques, le module d'abonné (SIM) vérifie la concordance des différents champs apparaissant dans le cryptogramme (CRY), notamment il contrôle les identificateurs d'applications (ID_APP) et les empreintes d'applications (FIN1) qui sont autorisées ou non à utiliser ses ressources (RES) (données ou fonctions).

Dans une variante, le cryptogramme (CRY) peut inclure un compteur servant à empêcher le double usage d'un même cryptogramme adressé au module d'abonné (SIM) (replay attack). En effet deux applications du même type peuvent porter le même identificateur et avoir la même empreinte (FIN1). Dans ce cas, le module d'abonné (SIM) contrôlera aussi la valeur de ce compteur par comparaison avec celle d'un compteur de référence stocké et régulièrement mis à jour.

Une variante au compteur est d'utiliser un aléa (nombre aléatoire) généré par le module d'abonné (SIM). Cet aléa est transmis avec les données envoyées au serveur de contrôle (CSE). Ce dernier renvoie cet aléa dans le message de réponse et le module d'abonné (SIM) peut vérifier qu'il s'agit bien d'un nouveau message.

Plus généralement, afin d'éviter tout risqué d'usage d'un ancien cryptogramme (CRY), cette dernière comprend une variable prédictible par le module d'abonné (SIM), soit un compteur ou un aléa.

Dans une autre variante le cryptogramme (CRY) généré à l'aide d'une clé du type RSA ou IDEA peut être remplacée par un bloc généré avec une clé partagée HMAC (Keyed-Hashing for Message Authentication) à partir de l'ensemble (IMSI, IMEISV, identificateur de l'application, empreinte de l'application, identificateurs des ressources SIM, instructions de blocage/libération des ressources SIM). HMAC est un mécanisme pour l'authentification de messages par l'utilisation de fonctions de hachage cryptographiques telles que MD5 (Message Digest) ou SHA-1 (Secure Hash Algorithm), en combinaison avec une clé partagée.

Cette clé présente à la fois dans le serveur de contrôle (CSE) et dans le module d'abonné (SIM) peut être chargée lors de la personnalisation du module d'abonné (SIM) ou lors de l'installation de certaines ressources (RES) dans le module d'abonné (SIM). Selon les options, à chaque ressource (RES) ou groupe de ressources du module d'abonné (SIM) peut être associée une clé différente, ou bien, la clé peut être globale pour l'ensemble des ressources (RES) et unique pour un module d'abonné (SIM) donné.

Le cryptogramme (CRY) permet ainsi au module d'abonné (SIM) de connaître la ou les ressources (RES) pouvant être libérées ou bloquées dans le module d'abonné (SIM) pour l'équipement mobile (CB) correspondant.

Les deux empreintes utilisées (FIN1, respectivement FIN2) sont des éléments déterminants car elles constituent un moyen de contrôle cryptographique de l'application (APP) par l'équipement mobile (CB) et par le module d'abonné (SIM). Un tel contrôle est nécessaire afin d'empêcher qu'une application tierce s'authentifie avec un cryptogramme (CRY) donné. En effet, si le cryptogramme A authentifie l'application A auprès du module d'abonné A dans un équipement mobile A, il faut éviter qu'une autre application B s'authentifie indûment avec ce même cryptogramme A auprès du module d'abonné A dans l'équipement mobile A.

Selon une variante, l'empreinte de l'application (FIN1) incluse dans le cryptogramme (CRY) reste confidentielle de bout en bout entre le serveur de contrôle (CSE) et le module d'abonné (SIM). Pour ce faire l'empreinte (FIN1) est encryptée par le serveur de contrôle (CSE) et décryptée par le module d'abonné (SIM). De plus, l'application (APP) peut être personnalisée pour un chargement donné de manière à ce que l'empreinte (FIN1) incluse dans le cryptogramme (CRY) et l'empreinte (FIN2) de l'application (APP) calculée par l'environnement d'exécution (AEE) restent identiques mais dépendent de l'identité de l'équipement mobile (CB). Une telle mesure est nécessaire si l'on désire empêcher qu'une application tierce s'authentifie avec une empreinte donnée dans un autre environnement d'exécution d'applications (AEE) dont l'interface avec le module d'abonné (SIM) serait compromise. En effet, si l'empreinte A authentifie l'application A auprès du module d'abonné A dans un équipement mobile A, il faut éviter qu'une autre application B s'authentifie indûment avec cette même empreinte A auprès du module d'abonné B dans l'équipement mobile B.

Selon une autre variante, chaque application (du type Java) est accompagnée de deux cryptogrammes: un cryptogramme Java destiné à la machine virtuelle (VM) et un cryptogramme (CRY) destiné au module d'abonné (SIM). Ces deux cryptogrammes comprennent entre autre la même empreinte d'application (ici appelée FIN2) qui est celle du code de l'application Java. Ainsi, lorsque le module d'abonné (SIM) doit vérifier le cryptogramme (CRY) d'une application, il attend de la machine virtuelle (VM) l'empreinte (FIN2) associée à l'application (APP) en question qu'elle aura forcément calculée auparavant. L'empreinte de l'application est transmise par l'équipement mobile (CB) au module d'abonné (SIM). Cette empreinte ne provient pas du serveur de contrôle, elle est calculée par l'environnement d'exécution d'applications (AEE) de l'équipement mobile (CB) après le téléchargement de l'application (APP). Par contre, l'équipement mobile (CB) transmet le cryptogramme (CRY) préalablement chargé en sus de l'application depuis le serveur de contrôle au module d'abonné. Ainsi, ce dernier peut vérifier l'empreinte reçue par comparaison. L'équipement mobile (CB) ne peut pas tricher tant qu'il ne connaît pas l'empreinte attendue par le module d'abonné (SIM); le cas échéant, cela nécessiterait de rendre la fonction de calcul de l'empreinte, habituellement une fonction de hachage, réversible ou de trouver une autre empreinte donnant le même cryptogramme (CRY) ce qui est quasiment impossible.

La figure 1b montre le processus de vérification du cryptogramme (CRY) qui peut s'effectuer soit régulièrement, par exemple avant chaque sollicitation de l'application (APP) concernée, soit, de préférence, une seule fois avant son installation ou avant sa première utilisation. Si le cryptogramme (CRY) est valide, le module d'abonné (SIM) transmet un message d'acceptation (OK) à l'environnement d'exécution (AEE). L'application (APP) peut alors adresser ses requêtes ou commandes (CMD) au module d'abonné (SIM) via l'environnement d'exécution (AEE) et utiliser les ressources (RES) du module d'abonné (SIM). Ce dernier accepte les commandes (CMD) en transmettant les réponses (RSP) adéquates à l'application (APP) via l'environnement d'exécution (AEE), voir figure 1c.

Dans le cas d'un cryptogramme (CRY) non valide, le module d'abonné (SIM) transmet un message de refus (NOK) à l'environnement d'exécution (AEE). Dans un tel cas l'environnement d'exécution (AEE) peut soit annuler le processus d'installation de l'application (APP), soit l'application (APP) est installée et ses requêtes ou ses commandes (CMD) adressées au module d'abonné (SIM) via l'environnement d'exécution (AEE) resteront sans réponse (RSP) et les ressources (RES) du module d'abonné (SIM) ne pourront être utilisées.

Dans les deux cas d'acceptation et de refus (OK et NOK) l'environnement d'exécution d'application (AEE) peut relayer la réponse au serveur de contrôle (CSE). Le module d'abonné peut ainsi indirectement renvoyer une confirmation (CF) de réception du cryptogramme (CRY) au serveur de contrôle (CSE) et permettre un contrôle de bout en bout de l'opération, voir figure 1b. La confirmation (CF) comprend au moins un code de succès ou d'erreur de l'opération ainsi qu'un compteur servant à la protection contre des attaques par répétition. Ce message permet aussi au serveur de contrôle (CSE) de tenir à jour le compteur associé au module d'abonné (SIM).

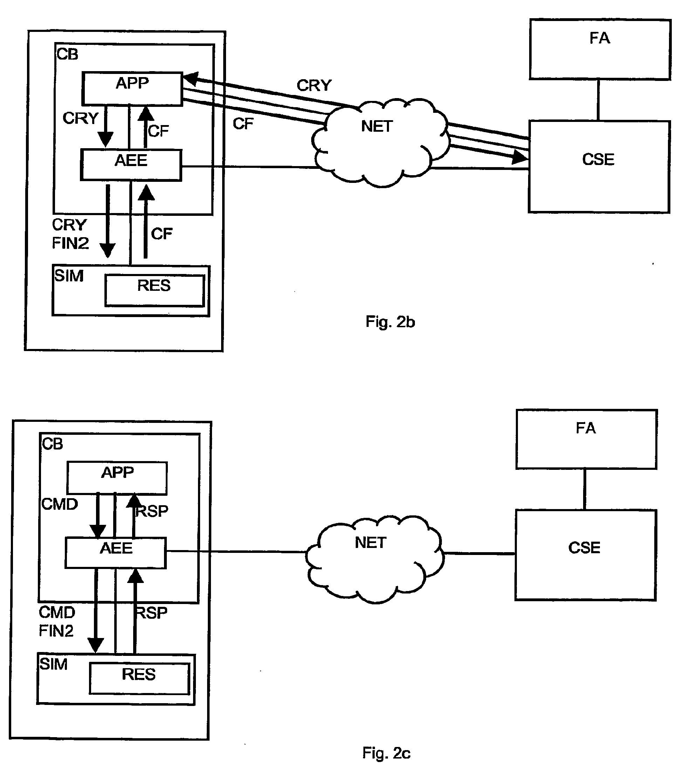

Selon le second mode de réalisation illustré par les figures 2a, 2b, 2c, l'application (APP) est téléchargée seule, après identification (ID) de l'équipement mobile (CB), sans cryptogramme (CRY), voir figure 2a.

Lors du processus de vérification, figure 2b, l'application (APP) sollicite, lors de son lancement par l'utilisateur, un cryptogramme (CRY) comprenant les droits d'utilisation de ressources (RES) pour ladite application. Ce cryptogramme (CRY) est téléchargé, depuis le serveur (CSE) de contrôle, directement par l'application (APP) qui le transmet au module d'abonné (SIM) via l'environnement d'exécution (AEE). Le module d'abonné (SIM) transmet une confirmation (CF) de réception du cryptogramme (CRY) au serveur (CSE), par le biais de l'application (APP) et non par le biais de l'environnement d'exécution (AEE) comme dans le cas du premier mode de réalisation. Dans ce mode, l'environnement d'exécution (AEE) ne joue qu'un rôle de relais entre l'application (APP) et le module d'abonné (SIM).

Le processus d'exécution de l'application (APP) après vérification du cryptogramme (CRY), voir figure 2c, se déroule de la même manière que dans le premier mode illustré par la figure 1 c et décrit plus haut.

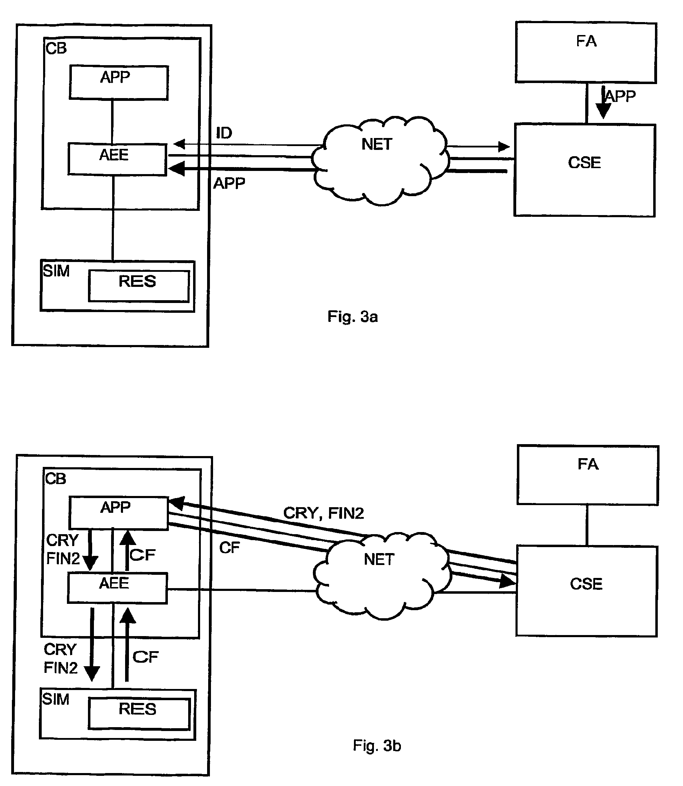

Les figures 3a, 3b, 3c montrent une troisième variante où l'application APP est téléchargée seule, après identification (ID) de l'équipement mobile (CB), depuis le serveur de contrôle (CSE) ou depuis un serveur intermédiaire de téléchargement d'applications (APP) voir figure 3a. Lors du processus de vérification (figure 3b), l'application charge le cryptogramme (CRY) et l'empreinte (FIN2) directement à partir du serveur (CSE) ou depuis un serveur intermédiaire de téléchargement d'applications (APP). Dans ce cas, à la différence des deux variantes précédentes, l'environnement d'application (AEE) ne calcule plus l'empreinte (FIN2) qui est calculée par une unité externe soit par le serveur de contrôle CSE, soit par un serveur intermédiaire de téléchargement d'applications (APP).

Le processus d'exécution de l'application (APP) après vérification du cryptogramme (CRY), voir figure 3c, se déroule de la même manière que dans les deux modes précédents illustrés par les figures 1c et 2c.

Ce troisième mode de réalisation peut être préféré car son avantage est de ne demander aucune modification de l'environnement d'exécution (AEE) tel qu'il est défini actuellement pour les applications Java installées dans les téléphones mobiles, c'est-à-dire qu'une modification des normes existantes n'est pas nécessaire.

De plus, la contrainte de la première variante voulant que les deux cryptogrammes utilisent la même empreinte tombe étant donné que les processus de vérification du cryptogramme (CRY) et celui de l'installation de l'application sont totalement indépendants.

Afin de personnaliser les empreintes calculées sur les applications, une possibilité consiste à ajouter au code de l'application, avant son chargement dans l'équipement mobile, une donnée différente pour chaque équipement mobile. Ainsi, lorsque l'empreinte est calculée par l'environnement d'application de l'équipement mobile, cette empreinte est unique et ne peut servir à un autre équipement mobile. Le cryptogramme va bien entendu être calculé par le serveur de contrôle sur la base des données d'origine de l'application et de cette donnée unique.

Dans une variante de l'invention, l'équipement mobile peut être remplacé par un équipement non mobile tel qu'un décodeur de télévision à péage ou un ordinateur. Des applications peuvent être téléchargées dans l'équipement à partir d'un serveur via un réseau de télécommunications. Un cryptogramme associé à l'application est stocké dans le module de sécurité et vérifié lors de la mise en service ou lors de chaque démarrage d'une application. Le résultat de cette vérification conditionne le fonctionnement de l'application en libérant ou en bloquant des ressources dans le module de sécurité.

## Revendications

1. Méthode d'authentification d'au moins une application (APP) fonctionnant dans un équipement (CB) connecté par un réseau (NET) à un serveur de contrôle (CSE), ledit équipement (CB) étant localement connecté à un module de sécurité (SIM), ladite application (APP) est chargée et/ou exécutée au moyen d'un environnement d'exécution d'applications (AEE) de l'équipement (CB) et utilise des ressources (RES) stockées dans le module de sécurité (SIM), comprenant les étapes préliminaires suivantes:
- réception de données comprenant au moins l'identifiant (IMEISV) de l'équipement (CB) et l'identifiant (IMSI) du module de sécurité (SIM), via le réseau (NET), par le serveur de contrôle (CSE)
- analyse et vérification par le serveur de contrôle (CSE) desdites données,
- génération d'un cryptogramme (CRY) comprenant une empreinte (FIN1) de l'application (APP), des données identifiant l'équipement (CB) et le module de sécurité (SIM) et des instructions (INS_RES) destinées audit module,
- transmission dudit cryptogramme (CRY), via le réseau (NET) et l'équipement (CB), au module de sécurité (SIM),
- vérification de l'application (APP) en comparant l'empreinte (FIN1) extraite du cryptogramme (CRY) reçu avec une empreinte (FIN2) déterminée par le module de sécurité (SIM),
ladite méthode est **caractérisée en ce que**, lors de l'initialisation et/ou de l'activation de l'application (APP), le module de sécurité (SIM) exécute les instructions (INS_RES) extraites du cryptogramme (CRY) et libère, respectivement bloque l'accès à certaines ressources (RES) dudit module de sécurité (SIM) en fonction du résultat de la vérification propre à cette application (APP) effectuée préalablement.

2. Méthode selon la revendication 1 **caractérisée en ce que** l'équipement est un équipement mobile (CB) de téléphonie mobile.

3. Méthode selon la revendication 1 **caractérisée en ce que** le réseau (NET) est un réseau mobile du type GSM ou GPRS ou UMTS.

4. Méthode selon la revendication 1 ou 2, **caractérisée en ce que** le module de sécurité (SIM) est un module d'abonné inséré dans l'équipement mobile (CB) de téléphonie mobile de type carte SIM.

5. Méthode selon la revendication 1 ou 4 **caractérisée en ce que** l'identification (ID) de l'ensemble équipement mobile (CB) / module d'abonné (SIM) est effectuée à partir de l'identifiant (IMEISV) de l'équipement mobile (CB) et de l'identifiant (IMSI) du module d'abonné (SIM) propre à un abonné au réseau (NET).

6. Méthode selon la revendication 1 **caractérisée en ce que** les instructions incluses dans le cryptogramme (CRY) reçu par le module de sécurité (SIM) conditionnent l'utilisation des applications (APP) selon des critères préétablis par l'opérateur et/ou le fournisseur d'applications (FA) et/ou l'utilisateur de l'équipement.

7. Méthode selon la revendication 6 **caractérisée en ce que** les critères définissent des limites d'utilisation d'une application (APP) selon des risques associés au logiciel de ladite application (APP) ou au matériel de l'équipement (CB) que l'opérateur désire prendre en compte.

8. Méthode selon la revendication 1 **caractérisée en ce que** la vérification de l'application (APP) avec le cryptogramme (CRY) s'effectue lors du premier démarrage ou lors de la première utilisation de ladite application (APP).

9. Méthode selon la revendication 1 **caractérisée en ce que** la vérification de l'application (APP) avec le cryptogramme (CRY) s'effectue périodiquement à un rythme donné selon des instructions provenant du serveur de contrôle (CSE).

10. Méthode selon la revendication 1 **caractérisée en ce que** la vérification de l'application (APP) avec le cryptogramme (CRY) s'effectue lors de chaque démarrage de ladite application (APP) sur l'équipement (CB).

11. Méthode selon la revendication 1 **caractérisée en ce que** le cryptogramme (CRY) est généré à l'aide d'une clé d'encryption asymétrique ou symétrique à partir d'un ensemble de données contenant, entre autres données, l'identifiant (IMEISV) de l'équipement (CB), l'identifiant (IMSI) du module de sécurité (SIM), un identificateur de l'application (APP), l'empreinte (FIN1) de l'application (APP) calculée avec une fonction unidirectionnelle de hachage, des identificateurs (RES_ID) des ressources du module de sécurité (SIM) et des instructions (INS_RES) de blocage/libération des ressources (RES) du module de sécurité (SIM).

12. Méthode selon la revendication 11 **caractérisée en ce que** le cryptogramme (CRY) comprend une variable prédictible par le module de sécurité (SIM) évitant le double usage d'un même cryptogramme (CRY), la valeur de ladite variable étant contrôlée par le module de sécurité (SIM) par comparaison avec celle d'une valeur de référence stockée dans ledit module et régulièrement mise à jour.

13. Méthode selon la revendication 1 **caractérisée en ce que** le module de sécurité (SIM) transmet au serveur de contrôle (CSE), via l'équipement (CB) et le réseau (NET), un message de confirmation (CF) lorsque ledit module de sécurité (SIM) a accepté ou refusé un cryptogramme (CRY) d'une application (APP).

14. Méthode selon la revendication 1 **caractérisée en ce que** le cryptogramme (CRY) est transmis au module de sécurité (SIM) en même temps que l'application (APP) est chargée dans l'équipement (CB) via l'environnement d'exécution des applications (AEE).

15. Méthode selon la revendication 1 **caractérisée en ce que** l'application (APP), une fois chargée dans l'équipement (CB) depuis le serveur (CSE) de contrôle via le réseau (NET), sollicite un cryptogramme (CRY) au serveur (CSE) lors de son initialisation et transmet ledit cryptogramme (CRY) au module de sécurité (SIM), le message de confirmation (CF) d'acceptation ou de refus du cryptogramme (CRY) étant transmis par le module de sécurité (SIM) au serveur via l'application (APP).

16. Méthode selon la revendication 1, **caractérisée en ce que** l'équipement est un décodeur de télévision à péage ou un ordinateur auquel est connecté le module de sécurité.

17. Module de sécurité comprenant des ressources (RES) destinées à être localement accédées par au moins une application (APP) installée dans un équipement (CB) relié à un réseau (NET), ledit équipement (CB) comprenant des moyens de lecture et de transmission de données comprenant au moins l'identifiant (IMEISV) de l'équipement (CB) et l'identifiant (IMSI) du module de sécurité (SIM), ledit module est **caractérisé en ce qu'**il comprend des moyens de réception, de stockage et d'analyse d'un cryptogramme (CRY) contenant entre autre données une empreinte (FIN1) de ladite application (APP) et des instructions (INS_RES), des moyens de vérification de ladite application (APP) et des moyens d'extraction et d'exécution des instructions (INS_RES) contenues dans le cryptogramme (CRY) libérant ou bloquant certaines ressources (RES) selon le résultat de la vérification de l'application (APP).

18. Module de sécurité selon la revendication 17, **caractérisé en ce qu'**il est du type "module d'abonné" ou "carte SIM" destiné à être relié à un équipement mobile.

## Claims

1. Authentication method of at least one application (APP) working in a equipment (CB) connected by a network (NET) to a control server (CSE), said equipment (CB) being locally connected to a security module (SIM), said application (APP) is loaded and/or executed by means of an application execution environment (AEE) of the equipment (CB) and uses resources (RES) stored in the security module (SIM), comprising the following preliminary steps:
- reception by the control server (CSE), via the network (NET), of data comprising at least the identifier (IMEISV) of the equipment (CB) and the identifier (IMSI) of the security module (SIM),
- analysis and verification by the control server (CSE) of said data,
- generation of a cryptogram (CRY) comprising a digest (FIN1) of the application (APP), data identifying the equipment (CB) and the security module (SIM) and instructions (INS RES) intended for said module,
- transmission of said cryptogram (CRY), via the network (NET) and the equipment (CB), to the security module (SIM),
- verification of the application (APP) by comparing the digest (FIN1) extracted from the cryptogram (CRY) received with a digest (FIN2) determined by the security module (SIM),
said method is **characterized in that**, during the initialization and/or the activation of the application (APP), the security module (SIM) executes the instructions (INS_RES) extracted from the cryptogram (CRY) and releases, respectively blocks the access to certain resources (RES) of said security module (SIM) according to the result of the verification suited to this application (APP) carried out previously.

2. Method according to claim 1 **characterized in that** the equipment is a mobile equipment (CB) of mobile telephony.

3. Method according to claim 1 **characterized in that** the network (NET) is a mobile network of the type GSM or GPRS or UMTS.

4. Method according to claim 1 or 2, **characterized in that** the security module (SIM) is a subscriber module inserted into the mobile equipment (CB) of mobile telephony of the SIM card type.

5. Method according to claims 1 or 4 **characterized in that** the identification (ID) of the set mobile equipment (CB) / subscriber module (SIM) is carried out from the identifier (IMEISV) of the mobile equipment (CB) and from the identifier of the subscriber module (SIM) suited to a subscriber to the network (NET).

6. Method according to claim 1 **characterized in that** the instructions included in the cryptogram (CRY) received by the security module (SIM) condition the use of the applications (APP) according to criteria established previously by the operator an/or the application supplier (FA) and/or the user of the equipment.

7. Method according to claim 6 **characterized in that** the criteria defining the limits of use of an application (APP) according to the risks associated with the software of said application (APP) or with the hardware of the equipment (CB) that the operator desires to take into account.

8. Method according to claim 1 **characterized in that** the verification of the application (APP) with the cryptogram (CRY) is carried out at the time of the first initialization or at the time of the first use of said application (APP).

9. Method according to claim 1 **characterized in that** the verification of the application (APP) with the cryptogram (CRY) is periodically carried out at a given rate according to instructions originating from the control server (CSE).

10. Method according to claim 1 **characterized in that** the verification of the application (APP) with the cryptogram (CRY) is carried out at the time of each initialization of said application (APP) on the equipment (CB).

11. Method according to claim 1 **characterized in that** the cryptogram (CRY) is generated with the aid of an asymmetrical or symmetrical encryption key from a data set containing, among other data, the identifier (IMEISV) of the equipment (CB), the identifier (IMSI) of the security module (SIM), an identifier of the application (APP), the digest (FIN1) of the application (APP) calculated with an unidirectional hash function and identifiers (RES_ID) of the resources of the security module (SIM) and instructions (INS_RES) for locking/releasing of resources of the security module (SIM).

12. Method according to claim 11 **characterized in that** the cryptogram (CRY) includes a variable that is predictable by the security module (SIM) avoiding the double use of a same cryptogram (CRY), the value of said variable being controlled by the security module (SIM) by making a comparison with that of a reference value stored in said module and regularly updated.

13. Method according to claim 1 **characterized in that** the security module (SIM) transmits to the control server (CSE), via the equipment (CB) and the network (NET), a confirmation message (CF) when said security module (SIM) has accepted or refused a cryptogram (CRY) of an application (APP).

14. Method according to the claim 1 **characterized in that** the cryptogram (CRY) is transmitted to the security module (SIM) at the same time as the application (APP) is loaded into the equipment (CB) via the execution environment of the applications (AEE).

15. Method according to claim 1 **characterized in that** the application (APP), once loaded into the equipment (CB) from the control server (CSE) via the network (NET), requests a cryptogram (CRY) from the server (CSE) at the time of its initialization and transmits said cryptogram (CRY) to the security module (SIM), the confirmation message (CF) of acceptance or refusal of the cryptogram (CRY) being transmitted by the security module (SIM) to the server via the application (APP).

16. Method according to claim 1, **characterized in that** the equipment is a Pay-TV decoder or a computer to which the security module is connected.

17. Security module comprising resources (RES) intended to be accessed locally by at least one application (APP) installed in an equipment (CB) connected to a network (NET), said equipment (CB) comprising means for reading and transmission data comprising at least the identifier (IMEISV) of the equipment (CB) and the identifier (IMSI) of the security module (SIM), said module is **characterized in that** it includes means for reception, storage and analysis of a cryptogram (CRY) containing among other data, a digest (FIN1) of said application (APP) and instructions (INS_RES), as well as means for verification of said application (APP), and means for extraction and execution of the instructions (INS_RES) contained in the cryptogram (CRY) releasing or blocking certain resources (RES) according to the result of the verification of the application (APP).

18. Security module according to claim 17, **characterized in that** it is of the "subscriber module " or " SIM card" type intended to be connected to a mobile equipment.

## Patentansprüche

1. Verfahren zur Authentifizierung zumindest einer Anwendung (APP), die in einem über ein Netz (NET) an einen Kontrollserver (CSE) angeschlossenen Endgerät (CB) funktioniert, wobei das Endgerät (CB) lokal mit einem Sicherheitsmodul (SIM) verbunden ist und die Anwendung (APP) mittels einer Anwendungs-Ablaufumgebung (AEE) des Endgeräts (CB) geladen und/oder ausgeführt wird und Ressourcen (RES) nutzt, die im Sicherheitsmodul (SIM) gespeichert sind, mit den folgenden vorangehenden Schritten:
Empfang von Daten, die zumindest die Kennung (IMEISV) des Endgeräts (CB) und die Kennung (IMSI) des Sicherheitsmoduls (SIM) umfassen, über das Netz (NET) durch den Kontrollserver (CSE),
Analyse und Verifizierung der Daten durch den Kontrollserver (CSE),
Erzeugung eines Kryptogramms (CRY), das einen Fingerprint (FIN1) der Anwendung (APP), das Endgerät (CB) und den Sicherheitsmodul (SIM) identifizierende Daten sowie für den Modul bestimmte Anweisungen (INS_RES) umfasst,
Übermittlung des Kryptogramms (CRY) über das Netz (NET) und das Endgerät (CB) an den Sicherheitsmodul (SIM),
Verifizierung der Anwendung (APP) durch Vergleich des aus dem empfangenen Kryptogramm (CRY) herausgezogenen Fingerprints (FIN1) mit einem durch den Sicherheitsmodul (SIM) ermittelten Fingerprint (FIN2),
wobei das Verfahren **dadurch gekennzeichnet ist, dass** bei der Initialisierung und/oder Aktivierung der Anwendung (APP) der Sicherheitsmodul (SIM) die aus dem Kryptogramm (CRY) herausgezogenen Anweisungen (INS_RES) ausführt und je nach dem Ergebnis der zuvor ausgeführten, auf diese Anwendung (APP) zutreffenden Verifizierung den Zugriff auf bestimmte Ressourcen (RES) des Sicherheitsmoduls (SIM) freigibt bzw. blockiert.

2. Verfahren nach Anspruch 1, **dadurch gekennzeichnet, dass** das Endgerät ein mobiles Endgerät (CB) der Mobiltelefonie ist.

3. Verfahren nach Anspruch 1, **dadurch gekennzeichnet, dass** das Netz (NET) ein Mobilnetz vom Typ eines GSM oder GPRS oder UMTS ist.

4. Verfahren nach Anspruch 1 oder 2, **dadurch gekennzeichnet, dass** der Sicherheitsmodul (SIM) ein Teilnehmermodul vom Typ einer SIM-Karte ist, der in das mobile Endgerät (CB) der Mobiltelefonie eingesetzt ist.

5. Verfahren nach Anspruch 1 oder 4, **dadurch gekennzeichnet, dass** die Identifizierung (ID) der Gruppe aus mobilem Endgerät (CB) und Teilnehmermodul (SIM) von der Kennung (IMEISV) des mobilen Endgeräts (CB) und der Kennung (IMSI) des einem Teilnehmer im Netz (NET) gehörenden Teilnehmermoduls (SIM) ausgehend erfolgt.

6. Verfahren nach Anspruch 1, **dadurch gekennzeichnet, dass** die Anweisungen, die in dem durch den Sicherheitsmodul (SIM) empfangenen Kryptogramm (CRY) enthalten sind, nach im Voraus durch den Betreiber und/oder den Anwendungs-Dienstleister (FA) und/oder den Benutzer des Endgeräts aufgestellten Kriterien Bedingungen für die Nutzung der Anwendungen (APP) vorgeben.

7. Verfahren nach Anspruch 6, **dadurch gekennzeichnet, dass** die Kriterien die Grenzen der Nutzung einer Anwendung (APP) je nach den Risiken definieren, die mit der Software der Anwendung (APP) oder der Hardware des Endgeräts (CB) verbunden sind und die der Betreiber zu berücksichtigen wünscht.

8. Verfahren nach Anspruch 1, **dadurch gekennzeichnet, dass** die Verifizierung der Anwendung (APP) mit dem Kryptogramm (CRY) während des ersten Starts oder während der ersten Nutzung der Anwendung (APP) erfolgt.

9. Verfahren nach Anspruch 1, **dadurch gekennzeichnet, dass** die Verifizierung der Anwendung (APP) mit dem Kryptogramm (CRY) je nach vom Kontrollserver (CSE) kommenden Anweisungen periodisch in einem gegebenen Rhythmus erfolgt.

10. Verfahren nach Anspruch 1, **dadurch gekennzeichnet, dass** die Verifizierung der Anwendung (APP) mit dem Kryptogramm (CRY) bei jedem Start der Anwendung (APP) im Endgerät (CB) erfolgt.

11. Verfahren nach Anspruch 1, **dadurch gekennzeichnet, dass** das Kryptogramm (CRY) mit Hilfe eines asymmetrischen oder symmetrischen Verschlüsselungsschlüssels von einer Gruppe von Daten ausgehend erzeugt wird, die neben anderen Daten die Kennung (IMEISV) des Endgeräts (CB), die Kennung (IMSI) des Sicherheitsmoduls (SIM), eine Kennung der Anwendung (APP), den mit einer einseitig gerichteten Hash-Funktion berechneten Fingerprint (FIN1) der Anwendung (APP), Kennungen (RES_ID) der Ressourcen des Sicherheitsmoduls (SIM) und Anweisungen (INS_RES) für die Blockade bzw. Freigabe der Ressourcen (RES) des Sicherheitsmoduls (SIM) umfassen.

12. Verfahren nach Anspruch 11, **dadurch gekennzeichnet, dass** das Kryptogramm (CRY) eine durch den Sicherheitsmodul (SIM) vorhersagbare Variable umfasst, wodurch die doppelte Verwendung ein und desselben Kryptogramms (CRY) vermieden wird, wobei der Wert dieser Variablen durch Vergleich mit einem in dem benannten Modul gespeicherten und regelmässig aktualisierten Bezugswert durch den Sicherheitsmodul (SIM) kontrolliert wird.

13. Verfahren nach Anspruch 1, **dadurch gekennzeichnet, dass** der Sicherheitsmodul (SIM) dem Kontrollserver (CSE) über das Endgerät (CB) und das Netz (NET) eine Bestätigungsnachricht (CF) übermittelt, wenn der Sicherheitsmodul (SIM) ein Kryptogramm (CRY) einer Anwendung (APP) angenommen oder abgelehnt hat.

14. Verfahren nach Anspruch 1, **dadurch gekennzeichnet, dass** das Kryptogramm (CRY) zu der gleichen Zeit an den Sicherheitsmodul (SIM) übermittelt wird, zu der die Anwendung (APP) über die Ablaufumgebung der Anwendungen (AEE) in das Endgerät (CB) geladen wird.

15. Verfahren nach Anspruch 1, **dadurch gekennzeichnet, dass** die Anwendung (APP), nachdem sie vom Kontrollserver (CSE) über das Netz (NET) in das Endgerät (CB) geladen worden ist, während ihrer Initialisierung ein Kryptogramm (CRY) beim Server (CSE) anfordert und dieses Kryptogramm (CRY) an den Sicherheitsmodul (SIM) übermittelt, wobei die Bestätigungsnachricht (CF) über die Annahme oder Ablehnung des Kryptogramms (CRY) durch den Sicherheitsmodul (SIM) über die Anwendung (APP) an den Server übermittelt wird.

16. Verfahren nach Anspruch 1, **dadurch gekennzeichnet, dass** das Endgerät ein Gebührenfernsehdekodierer oder ein Computer ist, an die der Sicherheitsmodul angeschlossen ist.

17. Sicherheitsmodul mit Ressourcen (RES), die für den lokalen Zugriff durch zumindest eine Anwendung (APP) bestimmt sind, die in einem an ein Netz (NET) angeschlossenen Endgerät (CB) installiert ist, wobei das Endgerät (CB) Mittel für ein Lesen und eine Übermittlung von Daten umfasst, die zumindest die Kennung (IMEISV) des Endgeräts (CB) und die Kennung (IMSI) des Sicherheitsmoduls (SIM) umfassen, wobei der Modul **dadurch gekennzeichnet ist, dass** er Mittel für den Empfang, die Speicherung und die Analyse eines Kryptogramms (CRY) umfasst, das unter anderen Daten einen Fingerprint (FIN1) der Anwendung (APP) sowie Anweisungen (INS_RES), Mittel für eine Verifizierung der Anwendung (APP) sowie Mittel für ein Herausziehen und Ausführen der im Kryptogramm (CRY) enthaltenen Anweisungen (INS_RES) enthält, um je nach dem Ergebnis der Verifizierung der Anwendung (APP) bestimmte Ressourcen (RES) freizugeben oder zu blockieren.

18. Sicherheitsmodul nach Anspruch 17, **dadurch gekennzeichnet, dass** er vom Typ eines "Teilnehmermoduls" oder einer "SIM-Karte" ist, die dafür bestimmt sind, mit einem mobilen Endgerät verbunden zu werden.
